# EUROPEAN PATENT APPLICATION

(11) **EP 4 489 338 A1**
(43) Date of publication of application: **08.01.2025**
(21) Application number: 22929379.0
(22) Date of filing: 04.03.2022
(51) Int. Cl.: H04L 5/00, H04W 24/02

(54) **COMMUNICATION METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/079324
(87) International publication number: WO 2023/164936

(57) **Abstract**

Embodiments of the present disclosure relate to the technical field of mobile communication, and provide a communication method and apparatus, an electronic device, and a storage medium. The communication method is applied to an initiating end. The method comprises: determining a first wireless frame, the first wireless frame comprising a first identification bit, the first identification bit indicating a sensing measurement type of a wireless local area network (WLAN) sensing measurement process (101), and the sensing measurement type comprising trigger-based (TB-based) sounding or non-trigger-based (Non-TB based) sounding; and sending the first wireless frame (102). Embodiments of the disclosure provide a means for indicating a sensing measurement type in a WLAN sensing process.

## Description

### TECHNICAL FIELD

Embodiments of the disclosure relate to a technical field of mobile communications, and in particular, to a communication method and apparatus, an electronic device, and a storage medium.

### BACKGROUND

With a rapid development of mobile communication technology, wireless fidelity (Wi-Fi) technology has made great progress in terms of transmission rate, throughput, and the like. Currently, content studied by the Wi-Fi technology comprises, for example, transmission of 320 MHz bandwidth, aggregation and collaboration of more than one frequency band, and the like, and its main application scenarios may be, such as video transmission, augmented reality (AR), virtual reality (VR), and the like.

In the currently studied Wi-Fi technology, a wireless local area network (WLAN) sensing technology may be supported. For example, application scenarios such as location discovery, proximity detection, and presence detection in a dense environment (such as, a home environment and an enterprise environment) are found. A sensing measurement type may generally include a triggered based (triggered based sounding, TB or TB-based) sensing mode and a non triggered based (non-TB based) type. Therefore, a manner for indicating a sensing measurement type of a WLAN sensing procedure needs to be provided.

### SUMMARY

Embodiments of the disclosure provide a communication method and apparatus, an electronic device, and a storage medium, to provide a manner for indicating a sensing measurement type of a wireless local area network (WLAN) sensing procedure.

According to an aspect of embodiments of the disclosure, a communication method is provided, which is performed by an initiator. The method includes:
determining a first radio frame, in which the first radio frame includes first indication information, and the first indication information indicates a sensing measurement type of a wireless local area network (WLAN) sensing measurement procedure; and the sensing measurement type includes a trigger-based (TB) sensing measurement or a non triggered based (non-TB) sensing measurement; and
sending the first radio frame.

According to another aspect of embodiments of the disclosure, a communication method is further provided, which is performed by a responder. The method includes:
receiving a first radio frame; in which the first radio frame includes first indication information, and the first indication information indicates a sensing measurement type of a WLAN sensing measurement procedure initiated by an initiator; and the sensing measurement type includes a trigger-based (TB) sensing measurement or a non triggered based (non-TB) sensing measurement;
performing a processing operation according to the first indication information.

According to another aspect of embodiments of the disclosure, a network device is further provided. The network device is an initiator. The network device includes:
a determining module, configured to determine a first radio frame, in which the first radio frame includes first indication information, and the first indication information indicates a sensing measurement type of a WLAN sensing measurement procedure; and the sensing measurement type includes a trigger-based (TB) sensing measurement or a non triggered based (non-TB) sensing measurement; and
a sending module, configured to send the first radio frame.

According to a fourth aspect of embodiments of the disclosure, a network device is further provided. The network device is a responder. The network device includes:
a receiving module, configured to receive a first radio frame, in which the first radio frame includes first indication information, and the first indication information indicates a sensing measurement type of a WLAN sensing measurement procedure; the sensing measurement type includes a trigger-based (TB) sensing measurement or a non triggered based (non-TB) sensing measurement;
a processing module, configured to perform a processing operation according to the first indication information.

According to another aspect of embodiments of the disclosure, a communication device is further provided, applied to an initiator. The device includes:
a radio frame determining module, configured to determine a first radio frame, in which the first radio frame includes first indication information, and the first indication information indicates a sensing measurement type of a WLAN sensing measurement procedure; and the sensing measurement type includes a trigger-based (TB) sensing measurement or a non triggered based (non-TB) sensing measurement;
a radio frame sending module, configured to send the first radio frame.

According to another aspect of embodiments of the disclosure, a communication device, applied to a responder is further provided. The device includes:
a radio frame receiving module, configured to receive a first radio frame, in which the first radio frame includes first indication information, and the first indication information indicates a sensing measurement type of a WLAN sensing measurement procedure initiated by an initiator; and the sensing measurement type includes a trigger-based (TB) sensing measurement or a non triggered based (non-TB) sensing measurement;
an operation processing module, configured to perform a processing operation according to the first indication information.

Embodiments of the disclosure further provide an electronic device, including a memory, a processor, and a computer program stored in the memory and executable on the processor, in which when the processor executes the program, the method according to one or more of embodiments of the disclosure is implemented.

Embodiments of the disclosure further provide a computer-readable storage medium with a computer program stored thereon, in which when the computer program is executed by a processor, the method according to one or more of embodiments of the disclosure is implemented.

In embodiments of the disclosure, an initiator determines the first radio frame and sends the first radio frame, in which the first radio frame includes the first indication information, and the first indication information indicates the sensing measurement type of the WLAN sensing measurement procedure; and the sensing measurement type includes the TB sensing measurement or the non-TB sensing measurement. Embodiments of the disclosure provide a manner for indicating a sensing measurement type of a WLAN sensing procedure to improve the WLAN sensing procedure.

Additional aspects and advantages of embodiments of the disclosure are given in part in the following description, which will become apparent from the following description, or be learned from the practice of the disclosure.

### BRIEF DESCRIPTION OF THE DRAWINGS

In order to explain the technical solutions in embodiments of the disclosure more clearly, the drawings to be used in embodiments of the disclosure will be briefly introduced below. Obviously, the drawings described as below are only some embodiments of the disclosure. Those skilled in the art may obtain other drawings according to these drawings on the premise of not involving any inventive effort.
FIG 1 illustrates a first flowchart of a communication method according to an embodiment of the disclosure.
FIG 2 illustrates a first schematic diagram of a first example according to an embodiment of the disclosure.
FIG 3 illustrates a second schematic diagram of a first example according to an embodiment of the disclosure.
FIG 4 illustrates a third schematic diagram of a first example according to an embodiment of the disclosure.
FIG 5 illustrates a second flowchart of a communication method according to an embodiment of the disclosure.
FIG 6 illustrates a third flowchart of a communication method according to an embodiment of the disclosure.
FIG 7 illustrates a fourth flowchart of a communication method according to an embodiment of the disclosure.
FIG 8 illustrates a fifth flowchart of a communication method according to an embodiment of the disclosure.
FIG 9 illustrates a sixth flowchart of a communication method according to an embodiment of the disclosure.
FIG 10 illustrates a block diagram of a network device according to an embodiment of the disclosure.
FIG 11 illustrates a block diagram of a network device according to an embodiment of the disclosure.
FIG 12 illustrates a block diagram of an electronic device according to an embodiment of the disclosure.

### DETAILED DESCRIPTION

The term "and/or" in embodiments of the disclosure, describes a relationship of the associated objects, indicating that there may be three relationships. For example, A and/or B, may represent: any of existing A only, existing both A and B, or existing B only. The character "j" generally means the associated objects are in an "or" relationship.

It is understandable that, the term "more than one" in embodiments of the disclosure means two or more, which is similar to other quantifiers.

The example embodiments will be described in detail here, and examples thereof are shown in the accompanying drawings. When the following descriptions are referred to the accompanying drawings unless otherwise indicated, the same numbers in different drawings represent the same or similar elements. The implementations described in the following example embodiments do not represent all implementations consistent with the disclosure. Rather, they are merely examples of the apparatuses and methods consistent with some aspects of the disclosure as detailed in the appended claims.

The terms described in the disclosure are only for the purpose of describing specific embodiments and are not intended to limit the disclosure. The singular forms "a", "the" and "said" used in the disclosure and the appended claims are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in this disclosure to describe various information, such information shall not be limited to these terms. These terms are only used to distinguish the same type of information. For example, without departing from the scope of this disclosure, first information may also be referred to as second information, and similarly, and the second information may also be referred to as the first information. It depends on the context. For example, the word "if" as used herein may be interpreted as "while" or "when" or "in response to determining".

The technical scheme in embodiments of the disclosure will be described clearly and completely in combination with the accompany drawings in embodiments of the disclosure. Embodiments described are only a part of embodiments in the disclosure, rather than all the embodiments. On the basis of embodiments of the disclosure, all other embodiments obtained by those skilled in the art without creative work are within the protection scope of the disclosure.

Embodiments of the disclosure provide a communication method and apparatus, an electronic device, and a storage medium, to provide a manner for indicating a sensing measurement type of a wireless local area network (WLAN) sensing procedure.

The method and the apparatus are based on the same application concept. Since principles of solving problems by the method and the apparatus are similar, implementations of the apparatuses and the methods can be referred to each other, and details are not described herein again.

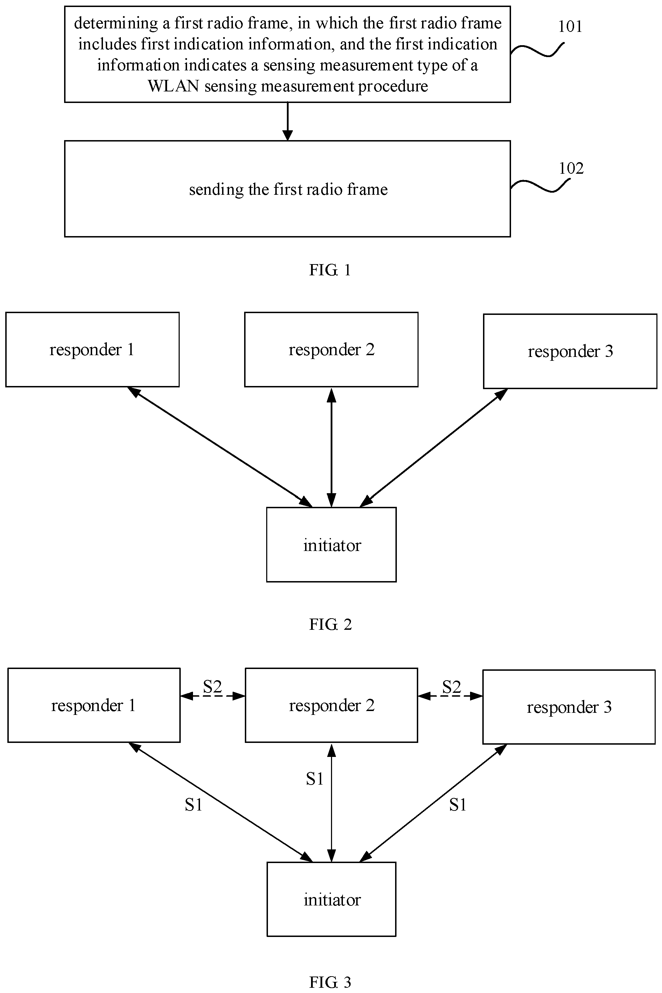

As shown in FIG 1, a communication method is provided in embodiments of the disclosure. Optionally, the method may be performed by a network device, the network device may be an initiator, and the initiator may be a sensing initiator or a sensing transmitter. The method may include the following steps.

At step 101, a first radio frame is determined, in which the first radio frame includes first indication information, and the first indication information indicates a sensing measurement type of a WLAN sensing measurement procedure; and the sensing measurement type includes a trigger-based (TB) sensing measurement or a non triggered based (non-TB) sensing measurement.

As a first example, referring to FIGS. 2 to 4, a WLAN sensing architecture and a WLAN sensing procedure used in the communication method provided in embodiments of the disclosure are first introduced.

FIG 2 shows an architecture diagram of WLAN sensing (procedure). A sensing initiator (or an initiator) initiates WLAN sensing (for example, initiates a WLAN sensing session). There may be more than one sensing responder (or sensing receiver) or responder, such as a responder 1, a responder 2 and a responder 3 in FIG 2, that responds to the sensing initiator. When the sensing initiator initiates the WLAN sensing, more than one associated or non-associated sensing responder of the WLAN sensing may respond.

Referring to FIG 3, the sensing initiator communicates with the sensing responder through a communication connection, such as a communication connection S1. A sensing responder communicates with another sensing responder through a communication connection S2.

Each sensing initiator may be a client, and each sensing responder (in this example, that is, the sensing responder 1 to the sensing responder 3) may be a station (STA) or an access point (AP). In addition, the STA and the AP may have more than one role in the WLAN sensing procedure. For example, in the WLAN sensing procedure, the STA may also serve as a sensing initiator. The sensing initiator may be a sensing transmitter, a sensing receiver, or both, or neither. In the WLAN sensing procedure, the sensing responder may also be a sensing transmitter, a sensing receiver, or both.

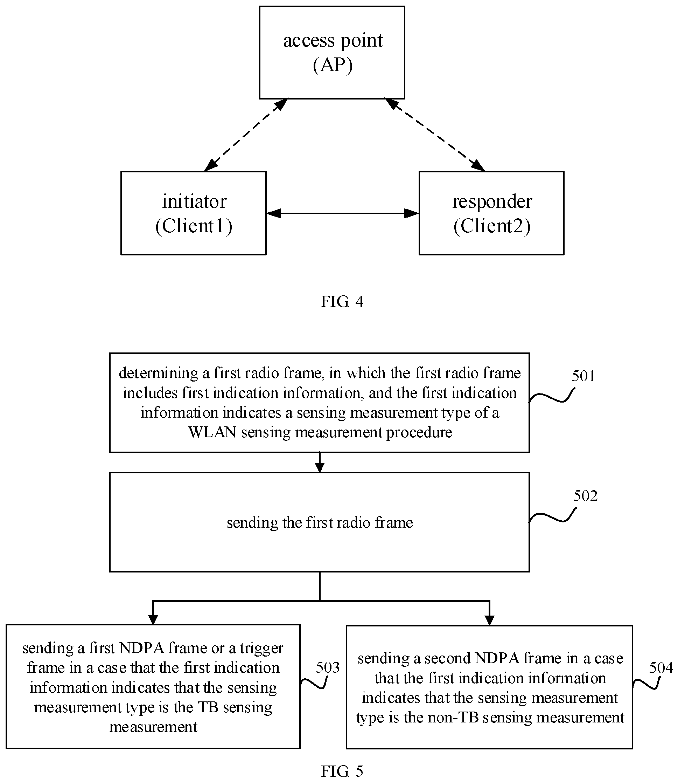

For another architecture as shown in FIG 4, the sensing initiator and the sensing responder may both be clients, and the two may communicate with each other by connecting to the same access point device. In FIG 4, Client 1 is a sensing initiator, and Client 2 is a sensing responder.

Generally, the WLAN sensing procedure includes procedures such as a WLAN sensing session setup procedure, a WLAN sensing measurement setup procedure, a WLAN sensing measurement termination procedure, and the like. In the WLAN sensing measurement setup procedure, the initiator determines the first radio frame, and the first indication information is carried in the first radio frame. The first indication information is used to indicate a sensing measurement type of a WLAN sensing measurement to be established by the initiator. The sensing measurement type includes the TB sensing measurement or the non-TB sensing measurement. For example, for a TB manner, an AP serves as the initiator (or a transmitter), and for a non-TB manner, a STA serves as the initiator (or a transmitter).

Optionally, the first radio frame may be a sensing session setup request frame or a sensing measurement setup request frame. The sensing measurement type may be indicated by one bit in the first radio frame. For example, "0" indicates the TB sensing measurement, and "1" indicates the non-TB sensing measurement. Or "1" indicates the TB sensing measurement, and "0" indicates the non-TB sensing measurement.

At step 102, the first radio frame is sent.

The initiator sends the first radio frame to a responder (or a receiver), and the sensing measurement type is indicated through the first radio frame, so that the responder determines an operation to be performed according to the sensing measurement type. For example, in a case that the sensing measurement type is the TB sensing measurement, the responder receives a null data packet announcement (NDPA) frame or a trigger frame (TF-trigger); or in a case that the sensing measurement type is the non-TB sensing measurement, the responder receives a NDPA frame.

In embodiments of the disclosure, the initiator determines the first radio frame and sends the first radio frame, in which the first radio frame includes the first indication information, the first indication information indicates a sensing measurement type of the WLAN sensing measurement procedure, and the sensing measurement type includes the TB sensing measurement or the non-TB sensing measurement. Embodiments of the disclosure provide a manner for indicating a sensing measurement type of the WLAN sensing procedure to improve the WLAN sensing procedure.

In an optional embodiment, the first indication information is a subelement of the first radio frame.

A type sub-field of the subelement indicates parameter information corresponding to the sensing measurement type.

The first indication information may be included in the first radio frame in a form of a subelement, and the type sub-field of the subelement is used to identify the parameter information corresponding to the sensing measurement type, such as parameter information supported by the TB sensing measurement or parameter information supported by the non-TB sensing measurement.

Referring to FIG 5, embodiments of the disclosure provides a communication method. Optionally, the method may be performed by a network device, the network device may be an initiator, and the initiator may be a sensing initiator or a sensing transmitter. The method may include the following steps.

At step 501, a first radio frame is determined, in which the first radio frame includes first indication information, and the first indication information indicates a sensing measurement type of a WLAN sensing measurement procedure; and the sensing measurement type includes a TB sensing measurement or a non-TB sensing measurement.

For a WLAN sensing architecture and a WLAN sensing procedure used in the communication method provided in embodiments of the disclosure, references can be made to the foregoing embodiments, and details are not described herein again.

Generally, the WLAN sensing procedure includes procedures such as a WLAN sensing session setup procedure, a WLAN sensing measurement setup procedure, a WLAN sensing measurement termination procedure, and the like. In the WLAN sensing measurement setup procedure, the initiator determines the first radio frame, and the first indication information is carried in the first radio frame. The first indication information is used to indicate a sensing measurement type of a WLAN sensing measurement to be established by the initiator. The sensing measurement type includes the TB sensing measurement or the non-TB sensing measurement. For example, for a TB manner, an AP serves as the initiator (or a transmitter), and for a non-TB manner, a STA serves as the initiator (or a transmitter).

Optionally, the first radio frame may be a sensing session setup request frame or a sensing measurement setup request frame. The sensing measurement type may be indicated by one bit in the first radio frame. For example, "0" indicates the TB sensing measurement, and "1" indicates the non-TB sensing measurement; or "1" indicates the TB sensing measurement, and "0" indicates the non-TB sensing measurement.

At step 502, the first radio frame is sent.

The initiator sends the first radio frame to a responder (or a receiver), and the sensing measurement type is indicated through the first radio frame, so that the responder determines, according to the sensing measurement type, an operation to be performed.

After step 502, step 503 or step 504 is performed.

At step 503, in a case that the first indication information indicates that the sensing measurement type is the TB sensing measurement, a first NDPA frame or a trigger frame is sent.

In a TB sensing measurement scenario, the initiator may be an AP, and the AP continues to send the first NDPA frame or the trigger frame (TF-trigger), so that the responder receives the first NDPA frame or the TF-trigger frame.

At step 504, in a case that the first indication information indicates that the sensing measurement type is the non-TB sensing measurement, a second NDPA frame is sent.

In a non-TB sensing measurement scenario, the initiator may be a STA, and the STA continues to send the second NDPA frame, so that the responder receives the second NDPA frame.

In an optional embodiment, the first NDPA frame includes at least one STA information (STA info) field. Each STA info field includes information of one STA. In the TB sensing measurement scenario, the AP serving as the initiator may communicate and connect with more than one responder. Therefore, the first NDPA frame may include one STA info field or at least two STA info fields.

The second NDPA frame includes one STA info field.

In the non-TB sensing measurement scenario, the STA serving as the initiator may only communicate and connect with one responder. Therefore, the second NDPA frame includes one STA info field.

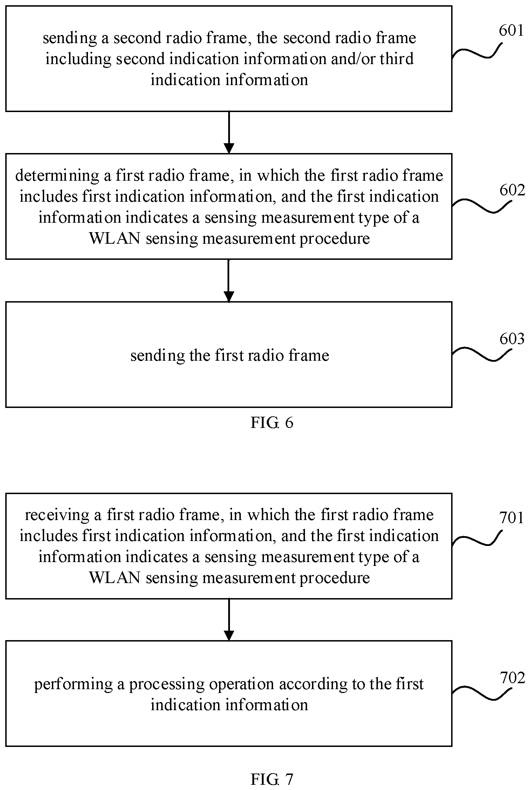

Referring to FIG 6, a communication method is provided in embodiments of the disclosure. Optionally, the method may be performed by a network device, the network device may be an initiator, and the initiator may be a sensing initiator or a sensing transmitter. The method may include the following steps.

At step 601, a second radio frame is sent, the second radio frame includes second indication information and/or third indication information; in which the second indication information indicates that the initiator supports WLAN sensing, the third indication information indicates a sensing measurement type supported by the initiator, and the sensing measurement type includes a TB sensing measurement or a non-TB sensing measurement.

Before sending a first radio frame (for example, in an initial association procedure or a sensing session setup procedure), the initiator first sends the second radio frame. The second indication information and/or the third indication information is carried in the second radio frame. The second indication information indicates that the initiator supports a WLAN sensing function. The third indication information indicates the sensing measurement type supported by the WLAN sensing supported by the initiator. The sensing measurement type includes the TB sensing measurement or the non-TB sensing measurement. For example, for a TB manner, an AP serves as the initiator (or a transmitter), and for a non-TB manner, a STA serves as the initiator (or a transmitter).

For example, the second indication information may be identified by 1 bit in the second radio frame to indicate that the initiator supports the WLAN sensing function. For example, "0" indicates that the WLAN sensing function is not supported, and "1" indicates that the WLAN sensing function is supported. The third indication information may be identified by 1 bit, to directly indicate the sensing measurement type. For example, "0" indicates the TB sensing measurement, and "1" indicates the non-TB sensing measurement; or "1" indicates the TB sensing measurement, and "0" indicates the non-TB sensing measurement.

In addition, 1 bit may be used to identify the second indication information, and then 1 bit is used to identify the third indication information.

Optionally, in embodiments of the disclosure, the second indication information and/or the third indication information is carried in an extended capabilities element of the second radio frame.

At step 602, the first radio frame is determined, the first radio frame includes first indication information, and the first indication information indicates a sensing measurement type of a WLAN sensing measurement procedure.

In a WLAN sensing measurement setup procedure, the initiator determines the first radio frame, and the first indication information is carried in the first radio frame. The first indication information is used to indicate a sensing measurement type of a WLAN sensing measurement to be established by the initiator.

Optionally, the first radio frame may be a sensing session setup request frame or a sensing measurement setup request frame. The sensing measurement type may be indicated by one bit in the first radio frame. For example, "0" indicates the TB sensing measurement, and "1" indicates the non-TB sensing measurement; or "1" indicates the TB sensing measurement, and "0" indicates the non-TB sensing measurement.

At step 603, the first radio frame is sent.

The initiator sends the first radio frame to a responder (or a receiver), and the sensing measurement type is indicated through the first radio frame, so that the responder determines, according to the sensing measurement type, an operation to be performed.

Optionally, in embodiments of the disclosure, the second radio frame includes at least one of a probe request frame, a multi-link (ML) probe request frame, an association request frame, a reassociation request frame, and an authentication request frame.

In embodiments of the disclosure, the initiator determines the first radio frame and sends the first radio frame, in which the first radio frame includes the first indication information, the first indication information indicates the sensing measurement type of the WLAN sensing measurement procedure; and the sensing measurement type includes the TB sensing measurement or the non-TB sensing measurement. Embodiments of the disclosure provide a manner for indicating a sensing measurement type of the WLAN sensing procedure to improve the WLAN sensing procedure.

Referring to FIG 7, a communication method is provided in embodiments of the disclosure. Optionally, the method may be performed by a network device, the network device may be a responder (a sensing responder or a sensing receiver). The method may include the following steps.

At step 701, a first radio frame is received, in which the first radio frame includes first indication information, and the first indication information indicates a sensing measurement type of a WLAN sensing measurement procedure initiated by an initiator; and the sensing measurement type includes a TB sensing measurement or a non-TB sensing measurement.

For a WLAN sensing architecture and the WLAN sensing procedure used in the communication method provided in embodiments of the disclosure, references can be made to the foregoing embodiments, and details are not described herein again.

Generally, the WLAN sensing procedure includes procedures such as a WLAN sensing session setup procedure, a WLAN sensing measurement setup procedure, a WLAN sensing measurement termination procedure, and the like. In the WLAN sensing measurement setup procedure, the responder (or a receiver) receives the first radio frame, and the first indication information is carried in the first radio frame. The first indication information is used to indicate a sensing measurement type of a WLAN sensing measurement to be established by the initiator. The sensing measurement type includes the TB sensing measurement or the non-TB sensing measurement. For example, for a TB manner, an AP serves as the initiator (or a transmitter), and for a non-TB manner, a STA serves as the initiator (or a transmitter).

Optionally, the first radio frame may be a sensing session setup request frame or a sensing measurement setup request frame. The sensing measurement type may be indicated by one bit in the first radio frame. For example, "0" indicates the TB sensing measurement, and "1" indicates the non-TB sensing measurement; or "1" indicates the TB sensing measurement, and "0" indicates the non-TB sensing measurement.

At step 702, a processing operation is performed according to the first indication information.

The responder determines, according to the sensing measurement type, an operation to be performed. For example, in a case that the sensing measurement type is the TB sensing measurement, the responder receives an NDPA frame or a trigger frame (TF-trigger); or in a case that the sensing measurement type is the non-TB sensing measurement, the responder receives an NDPA frame.

In an optional embodiment, the first indication information is a subelement of the first radio frame.

A type sub-field of the subelement indicates parameter information corresponding to the sensing measurement type.

The first indication information may be included in the first radio frame in a form of a subelement, and the type sub-field of the subelement is used to identify the parameter information corresponding to the sensing measurement type, such as parameter information supported by the TB sensing measurement or parameter information supported by the non-TB sensing measurement.

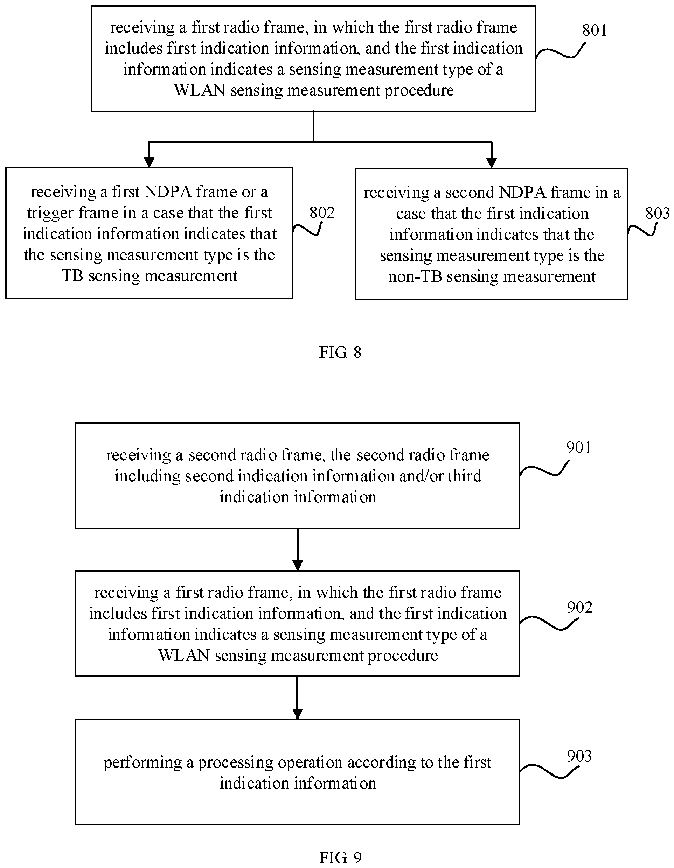

Referring to FIG 8, a communication method is provided in embodiments of the disclosure. Optionally, the method may be performed by a network device, the network device may be a responder (a sensing responder or a sensing receiver). The method may include the following steps.

At step 801, a first radio frame is received, in which the first radio frame includes first indication information, and the first indication information indicates a sensing measurement type of a WLAN sensing measurement procedure initiated by an initiator; and the sensing measurement type includes a TB sensing measurement or a non-TB sensing measurement.

For a WLAN sensing architecture and the WLAN sensing procedure used in the communication method provided in embodiments of the disclosure, references can be made to the foregoing embodiments, and details are not described herein again.

Generally, the WLAN sensing procedure includes procedures such as a WLAN sensing session setup procedure, a WLAN sensing measurement setup procedure, a WLAN sensing measurement termination procedure, and the like. In the WLAN sensing measurement setup procedure, the initiator sends the first radio frame to the responder (or a receiver), and the first indication information is carried in the first radio frame. The first indication information is used to indicate a sensing measurement type of a WLAN sensing measurement to be established by the initiator. The sensing measurement type includes the TB sensing measurement or the non-TB sensing measurement. For example, for a TB manner, an AP serves as the initiator (or a transmitter), and for a non-TB manner, a STA serves as the initiator (or a transmitter).

Optionally, the first radio frame may be a sensing session setup request frame or a sensing measurement setup request frame. The sensing measurement type may be indicated by one bit in the first radio frame. For example, "0" indicates the TB sensing measurement, and "1" indicates the non-TB sensing measurement; or "1" indicates the TB sensing measurement, and "0" indicates the non-TB sensing measurement.

After step 801, step 801 or step 803 is performed.

At step 802, in a case that the first indication information indicates that the sensing measurement type is the Tb sensing measurement, a first NDPA frame or a trigger frame is received.

In a TB sensing measurement scenario, the initiator may be an AP, and the AP sends the first NDPA frame or the TF-trigger frame, and the responder receives the first NDPA frame or the TF-trigger frame.

At step 803, in a case that the first indication information indicates that the sensing measurement type is the non-TB sensing measurement, a second NDPA frame is received.

In the non-TB sensing measurement scenario, the initiator may be a STA, and the STA sends the second NDPA frame, and the responder receives the second NDPA frame.

In an optional embodiment, the first NDPA frame includes at least one STA info field. Each STA info field includes information of one STA. In the TB sensing measurement scenario, the AP serving as the initiator may communicate and connect with more than one responder. Therefore, the first NDPA frame may include one STA info field or at least two STA info fields.

The second NDPA frame includes one STA info field.

In the non-TB sensing measurement scenario, the STA serving as the initiator may only communicate and connect with one responder. Therefore, the second NDPA frame includes one STA info field.

Referring to FIG 9, a communication method is provided in embodiments of the disclosure. Optionally, the method may be performed by a network device, and the network device may be a responder (a sensing responder or a sensing receiver). The method may include the following steps.

At step 901, a second radio second is received, the second radio frame includes second indication information and/or third indication information, in which the second indication information indicates that an initiator supports WLAN sensing, the third indication information indicates a sensing measurement type supported by the initiator, and the sensing measurement type includes a TB sensing measurement or a non-TB sensing measurement.

Before receives a first radio frame (for example, in an initial association procedure or a sensing session setup procedure), the responder first receives the second radio frame, and obtains the second indication information and/or the third indication information carried in the second radio frame. The second indication information indicates that the initiator supports a WLAN sensing function. The third indication information indicates the sensing measurement type supported by the WLAN sensing supported by the initiator. The sensing measurement type includes the TB sensing measurement or the non-TB sensing measurement. For example, for a TB- manner, an AP serves as the initiator (or a transmitter), and for a non-TB manner, a STA serves as the initiator (or a transmitter).

For example, the second indication information may be identified by 1 bit in the second radio frame to indicate that the initiator supports the WLAN sensing function. For example, "0" indicates that the WLAN sensing function is not supported, and "1" indicates that the WLAN sensing function is supported. The third indication information may also be directly identified by 1 bit, to directly indicate the sensing measurement type. For example, "0" indicates the TB, and "1" indicates the non-TB; or "1" indicates the TB, and "0" indicates the non-TB.

In addition, 1 bit may be used to identify the second indication information, and then 1 bit is used to identify the third indication information.

Optionally, in embodiments of the disclosure, the second indication information and/or the third indication information is carried in an extended capabilities element of the second radio frame.

At step 902, the first radio frame received, the first radio frame includes first indication information, and the first indication information indicates a sensing measurement type of a WLAN sensing measurement procedure initiated by the initiator.

In the WLAN sensing measurement setup procedure, the responder (or a receiver) receives the first radio frame, and obtains the first indication information carried in the first radio frame. The first indication information is used to indicate a sensing measurement type of a WLAN sensing measurement to be established by the initiator. The sensing measurement type includes the TB sensing measurement or the non-TB sensing measurement. Optionally, the first radio frame may be a sensing session setup request frame or a sensing measurement setup request frame. The sensing measurement type may be indicated by one bit in the first radio frame. For example, "0" indicates the TB sensing measurement, and "1" indicates the non-TB sensing measurement; or "1" indicates the TB sensing measurement, and "0" indicates the non-TB sensing measurement.

At step 903, a processing operation is performed according to the first indication information.

The responder determines, according to the sensing measurement type, an operation to be performed. For example, in a case that the sensing measurement type is the Tb sensing measurement, the responder receives an NDPA frame or a trigger frame; or in a case that the sensing measurement type is the non-TB sensing measurement, the responder receives an NDPA frame.

Optionally, in embodiments of the disclosure, the second radio frame includes at least one of a probe request frame, a ML probe request frame, an association request frame, a reassociation request frame, and an authentication request frame.

In embodiments of the disclosure, the responder receives the first radio frame. The first radio frame includes the first indication information, and the first indication information indicates the sensing measurement type of the WLAN sensing measurement procedure initiated by the initiator. The sensing measurement type includes the TB sensing measurement or the non-TB sensing measurement. The processing operation is performed according to the first indication information. Embodiments of the disclosure provide a manner for indicating the sensing measurement type of the WLAN sensing procedure, to improve the WLAN sensing procedure.

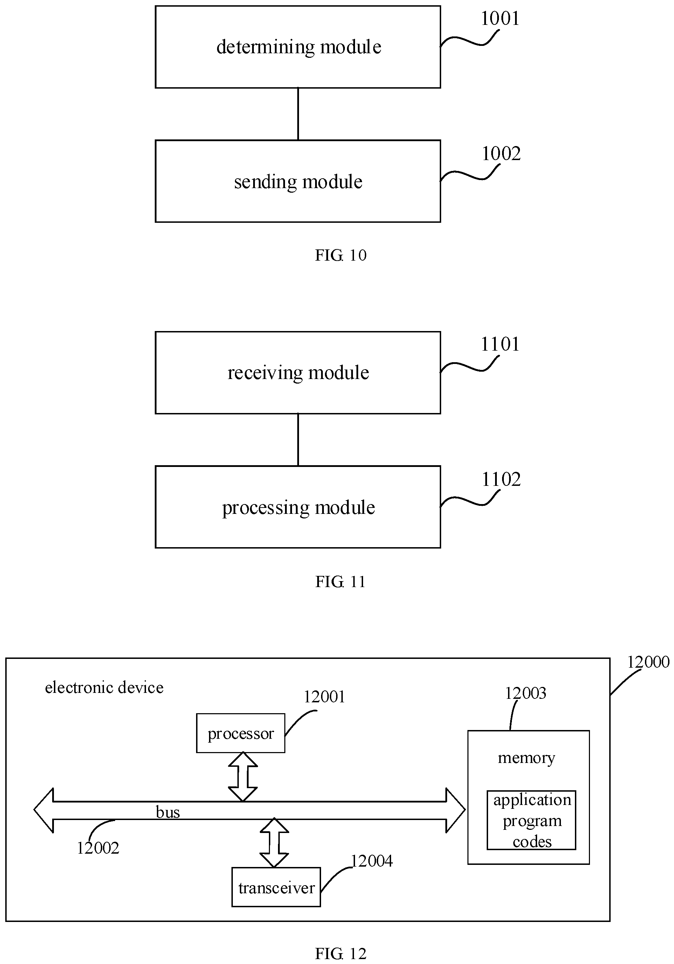

Referring to FIG 10, based on the same principle as the method provided in embodiments of the disclosure, a network device is provided in embodiments of the disclosure, and the network device is an initiator. The network device includes:
a determining module 1001, configured to determine a first radio frame, in which the first radio frame includes first indication information, and the first indication information indicates a sensing measurement type of a WLAN sensing measurement procedure; and the sensing measurement type includes a TB sensing measurement or a non-TB sensing measurement; and
a sending module 1002, configured to send the first radio frame.

Optionally, in embodiments of the disclosure, the network device includes:
a first sending module, configured to: in a case that the first indication information indicates that the sensing measurement type is the TB sensing measurement, send a first NDPA frame or a trigger frame;
   or,
a second sending module, configured to: in a case that the first indication information indicates that the sensing measurement type is the non-TB sensing measurement, send a second NDPA frame.

Optionally, in embodiments of the disclosure, the first NDPA frame includes one or more STA info fields.

The second NDPA frame includes one STA info field.

Optionally, in embodiments of the disclosure, the first indication information is a subelement of the first radio frame.

A type sub-field of the subelement indicates parameter information corresponding to the sensing measurement type.

Optionally, in embodiments of the disclosure, the network device includes:
a third sending module, configured to send a second radio frame, the second radio frame includes second indication information and/or third indication information; in which the second indication information indicates that the initiator supports WLAN sensing, the third indication information indicates a sensing measurement type supported by the initiator.

Optionally, in embodiments of the disclosure, the second radio frame includes at least one of a probe request frame, a ML probe request frame, an association request frame, a reassociation request frame, and an authentication request frame.

Optionally, in embodiments of the disclosure, the second indication information and/or the third indication information is carried in an extended capabilities element of the second radio frame.

Optionally, in embodiments of the disclosure, the first radio frame includes a sensing session setup request frame or a sensing measurement setup request frame.

According to the network device provided in the disclosure, the determining module 1001 determines the first radio frame, and the sending module 1002 sends the first radio frame, in which the first radio frame includes the first indication information, the first indication information indicates the sensing measurement type of the WLAN sensing measurement procedure; and the sensing measurement type includes the TB sensing measurement or the non-TB sensing measurement. Embodiments of the disclosure provide a manner for indicating the sensing measurement type of the WLAN sensing procedure to improve the WLAN sensing procedure.

A communication device is provided in embodiments of the disclosure, which is applied to an initiator. The communication device includes:
a radio frame determining module, configured to determine a first radio frame, in which the first radio frame includes first indication information, and the first indication information indicates a sensing measurement type of a WLAN sensing measurement procedure; and the sensing measurement type includes a TB sensing measurement or a non-TB sensing measurement; and
a radio frame sending module, configured to send the first radio frame.

The communication device further includes other modules of the network device in the foregoing embodiments, and details are not described herein again.

Referring to FIG 11, based on the same principle as the method provided in embodiments of the disclosure, a network device is provided in an embodiment of the disclosure, and the network device is a responder. The network device includes:
a receiving module 1101, configured to receive a first radio frame, in which the first radio frame includes first indication information, and the first indication information indicates a sensing measurement type of a WLAN sensing measurement procedure initiated by an initiator; and the sensing measurement type includes a TB sensing measurement or a non-TB sensing measurement; and
a processing module 1102, configured to perform a processing operation according to the first indication information.

Optionally, in embodiments of the disclosure, the processing module includes:
a first processing submodule, configured to: in a case that the first indication information indicates that the sensing measurement type is the TB sensing measurement, receive a first NDPA frame or a trigger frame;
   or,
a second processing submodule, configured to: in a case that the first indication information indicates that the sensing measurement type is the non-TB sensing measurement, receive a second NDPA frame.

Optionally, in embodiments of the disclosure, the first NDPA frame includes one or more STA info fields.

The second NDPA frame includes one STA info field.

Optionally, in embodiments of the disclosure, the first indication information is a subelement of the first radio frame.

A type sub-field of the subelement indicates parameter information corresponding to the sensing measurement type.

Optionally, in embodiments of the disclosure, the network device includes:
a second receiving module, configured to receive a second radio frame, the second radio frame includes second indication information and/or third indication information; in which the second indication information indicates that the initiator supports WLAN sensing, the third indication information indicates a sensing measurement type supported by the initiator.

Optionally, in embodiments of the disclosure, the second radio frame includes at least one of a probe request frame, a ML probe request frame, an association request frame, a reassociation request frame, and an authentication request frame.

Optionally, in embodiments of the disclosure, the second indication information and/or the third indication information is carried in an extended capabilities element of the second radio frame.

Optionally, in embodiments of the disclosure, the first radio frame includes a sensing session setup request frame or a sensing measurement setup request frame.

In embodiments of the disclosure, the receiving module 1101 receives the first radio frame. The first radio frame includes the first indication information, and the first indication information indicates the sensing measurement type of the WLAN sensing measurement procedure initiated by the initiator. The sensing measurement type includes the TB sensing measurement or the non-TB sensing measurement. The processing module 1102 performs the processing operation according to the first indication information. Embodiments of the disclosure provide a manner for indicating the sensing measurement type of the WLAN sensing procedure, to improve the WLAN sensing procedure

A communication device is provided in embodiments of the disclosure, which is applied to a responder. The communication device includes:
a radio frame receiving module, configured to receive a first radio frame, in which the first radio frame includes first indication information, and the first indication information indicates a sensing measurement type of a WLAN sensing measurement procedure initiated by an initiator; and the sensing measurement type includes a TB sensing measurement or a non-TB sensing measurement; and
an operation processing module, configured to perform a processing operation according to the first indication information. The communication device further includes other modules of the network device in the foregoing embodiments, and details are not described herein again.

In an optional embodiment, an electronic device is provided by embodiments of the disclosure. As shown in FIG 12, the electronic device 12000 shown in FIG 12 may be a server, including a processor 12001 and a memory 12003. The processor 12001 is connected to the memory 12003, for example, via a bus 12002. Optionally, the electronic device 12000 may further include a transceiver 12004. It should be noted that the number of the transceivers 12004 in practical applications is not limited to one, and the structure of the electronic device 12000 does not constitute a limitation on embodiments of the disclosure.

The processor 12001 may be a central processing unit (CPU), a general-purpose processor, a digital signal processor (DSP), an application specific integrated circuit (ASIC), a field programmable gate array (FPGA) or another programmable logic device, a transistor logic device, a hardware component, or any combination thereof. The processor may implement or execute various example logical blocks, modules, and circuits described with reference to content disclosed in the disclosure. Alternatively, the processor 12001 may be a combination for implementing a computing function, for example, a combination of one or more microprocessors, a combination of a DSP and a microprocessor, or the like.

The bus 12002 may include a path for transmitting information between the foregoing components. The bus 12002 may be a peripheral component interconnect (PCI) bus, an extended industry standard architecture (EISA) bus, or the like. The bus 12002 may be classified into an address bus, a data bus, a control bus, and the like. For convenience of representation, it is represented only with a thick line in FIG 12, but it doesn't mean that there's only one bus or one type of bus.

The memory 12003 may be a read only memory (ROM) or other type of static storage device that can store static information and instructions, a random access memory (RAM) or other type of dynamic storage device that can store information and instructions, or an electrically erasable programmable ROM (EEPROM), a Compact Disc ROM (CD ROM), or other optical disc storages, optical disc storages (including compressed optical discs, laser discs, optical discs, digital versatile discs, Blu ray discs, and the like), a magnetic disk storage media or other magnetic storage devices, or any other medium that can be used to carry or store desired program codes in the form of instructions or data structures and can be accessed by a computer, but is not limited to these.

The memory 12003 is configured to store application program codes for executing the solution of the disclosure, and the processor 12001 controls the execution. The processor 12001 is configured to execute the application program codes stored in the memory 12003, to implement the content shown in the foregoing method embodiments.

The electronic device includes, but is not limited to, a mobile terminal such as a mobile phone, a notebook computer, a digital broadcast receiver, a personal digital assistant (PDA), a portable android device (PAD), a portable multimedia player (PMP), a vehicle-mounted terminal (for example, a vehicle-mounted navigation terminal), and the like, and a fixed terminal such as a digital TV, a desktop computer, and the like. The electronic device illustrated in FIG 12 is only an example and should not bring any limitation on the function or application range of embodiments.

The server provided by the disclosure may be an independent physical server, or may be a server cluster or a distributed system composed of more than one physical server, or may be a cloud server providing basic cloud computing services such as cloud services, cloud databases, cloud computing, cloud functions, cloud storage, network services, cloud communication, middleware services, domain name services, security services, content delivery networks (CDNs), big data and artificial intelligence platforms, and the like. The terminal may be a smart phone, a tablet computer, a notebook computer, a desktop computer, a smart speaker, a smart watch, or the like, but is not limited thereto. The terminal and the server may be directly or indirectly connected in a wired or wireless communication manner, which is not limited in the disclosure.

Embodiments of the disclosure provide a computer-readable storage medium with a computer program stored thereon, and when the computer program runs on a computer, the computer may execute corresponding content in the foregoing method embodiments.

It should be understood that although the steps in the flowcharts of the drawings are sequentially displayed according to indication of arrows, these steps are not necessarily executed in sequence according to the order indicated by the arrows. Unless explicitly stated herein, the execution of these steps is not strictly limited in order, and may be executed in other orders. Moreover, at least some of the steps in the flowchart of the drawings may include more than one sub-step or more than one stage, and the sub-steps or stages are not necessarily performed at the same time, but may be executed at different moments, and the execution order thereof is not necessarily performed in sequence, but may be executed in turn or alternately with at least a part of the sub-steps or stages of other steps or other steps.

It should be noted that the computer-readable medium described in the disclosure may be a computer-readable signal medium or a computer-readable storage medium or a combination of the two. The computer-readable storage medium may be, for example, but not limited to, an electronic, magnetic, optical, electromagnetic, infrared, or semiconductor system, apparatus, or device, or any combination thereof. A more specific example of the computer-readable storage medium may include but is not limited to an electronic connector with one or more cables, portable computer disks, hard drives, random access memories (RAMs), ROMs, EPROMs or flash memories, optical fibers, portable CD-ROMs, optical storage devices, magnetic storage devices, or any suitable combination thereof. In the disclosure, the computer-readable storage medium may be any tangible medium that may contain or store a program that can be used by instruction execution systems, devices, or components, or combined of them. In the disclosure, a computer-readable signal medium may include a data signal transmitted in a baseband or as a part of a carrier wave, which carries computer-readable program codes. Such a data signal transmitted may take a variety of forms, including but not limited to an electromagnetic signal, an optical signal, or any suitable combination of the foregoing. The computer-readable signal medium may be any computer-readable medium in addition to a computer-readable storage medium. The computer-readable signal medium may transmit, spread or transport a program used by or in combination with an instruction execution system, apparatus, or device. The program codes contained on the computer-readable medium may be transmitted by any suitable medium, including but not limited to an electric cable, an optical fiber cable, a radio frequency (RF), etc., or any suitable combination of the foregoing.

The computer-readable medium may be included in the electronic device, or may exist alone without being assembled into the electronic device.

The computer-readable medium carries one or more programs, and when the one or more programs are executed by the electronic device, the electronic device is enabled to perform the method shown in the foregoing embodiments.

According to an aspect of the disclosure, a computer program product or a computer program is provided. The computer program product or the computer program includes computer instructions, and the computer instructions are stored in a computer-readable storage medium. A processor of a computer device reads the computer instructions from the computer-readable storage medium, and the processor executes the computer instructions, so that the computer device performs the method provided in the foregoing optional implementations.

Computer program codes for performing the operations of the disclosure may be written in one or more programming languages, including object-oriented programming languages, such as Java, Smalltalk, C + +, and conventional procedural programming languages, such as "C" language or similar programming languages. The program code may be executed entirely on a user's computer, partly on the user's computer, as a stand-alone software package, partly on the user's computer and partly on a remote computer, or entirely on the remote computer or server. In the case of involving the remote computer, the remote computer may be connected to the user's computer through any kind of network, including a local area network (LAN) or a wide area network (WAN), or may be connected to an external computer (e.g., connected through the Internet using an Internet service provider).

The flowchart and block diagrams in the drawings illustrate architectures, functionalities, and operations of possible implementations of systems, methods, and computer program products according to various embodiments of the disclosure. In this regard, each block in the flowchart or block diagrams may represent a module, segment, or a portion of code, which includes one or more executable instructions for implementing the specified logical function(s). It should also be noted that, in some alternative implementations, the functions noted in the blocks may occur in an order different from the order noted in the drawings. For example, two blocks shown in succession may, in fact, be executed substantially in parallel, or the blocks may sometimes be executed in the reverse order, depending upon the functionalities involved. It should also be noted that each block of the block diagrams and/or flowcharts, and combinations of blocks in the block diagrams and/or flowcharts, can be implemented by a special purpose hardware-based system that performs the specified functions or operations, or by a combination of special purpose hardware and computer instructions.

The modules involved in embodiments of the disclosure may be implemented by software or hardware. The name of a module does not constitute a limitation on the module itself in some cases, for example, the module A may also be described as "module A for performing B operation".

The above description is merely a description of the preferred embodiments of the disclosure and the applied technical principles. It should be understood by those skilled in the art that disclosed scope of the disclosure is not limited to the technical solution formed by the specific combination of the above technical features, and should also cover other technical solutions formed by any combination of the above technical features or equivalent features thereof without departing from the above disclosed concept. Technical solutions formed by replacing the above-mentioned features with (but not limited to) technical features with similar functions disclosed in the disclosure.

## Claims

1. A communication method, performed by an initiator, comprising:
determining a first radio frame, wherein the first radio frame comprises first indication information, and the first indication information indicates a sensing measurement type of a wireless local area network (WLAN) sensing measurement procedure; and the sensing measurement type comprises a trigger-based (TB) sensing measurement or a non triggered based (non-TB) sensing measurement; and
sending the first radio frame.

2. The method of claim 1, wherein after sending the first radio frame, the method comprises:
sending a first null data packet announcement (NDPA) frame or a trigger frame in a case that the first indication information indicates that the sensing measurement type is the TB sensing measurement;
or,
sending a second NDPA frame in a case that the first indication information indicates that the sensing measurement type is the non-TB sensing measurement.

3. The method of claim 2, wherein the first NDPA frame comprises one or more station information (STA info) fields; and
the second NDPA frame comprises one STA info field.

4. The method of claim 1, wherein the first indication information is a subelement of the first radio frame; and
a type sub-field of the subelement indicates parameter information corresponding to the sensing measurement type.

5. The method of claim 1, wherein before determining the first radio frame, the method comprises:
sending a second radio frame, the second radio frame comprising second indication information and/or third indication information; wherein the second indication information indicates that the initiator supports WLAN sensing, the third indication information indicates a sensing measurement type supported by the initiator.

6. The method of claim 5, wherein the second radio frame comprises at least one of a probe request frame, a multi-link (ML) probe request frame, an association request frame, a reassociation request frame, or an authentication request frame.

7. The method of claim 6, wherein the second indication information and/or the third indication information is carried in an extended capabilities element of the second radio frame.

8. The method of any one of claims 1 to 7, wherein the first radio frame comprises a sensing session setup request frame or a sensing measurement setup request frame.

9. A communication method, performed by a responder, comprising:
receiving a first radio frame; wherein the first radio frame comprises first indication information, and the first indication information indicates a sensing measurement type of a wireless local area network (WLAN) sensing measurement procedure initiated by an initiator; and the sensing measurement type comprises a trigger-based (TB) sensing measurement or a non triggered based (non-TB) sensing measurement; and
performing a processing operation according to the first indication information.

10. The method of claim 9, wherein performing the processing operation according to the first indication information comprises:
receiving a first null data packet announcement (NDPA) frame or a trigger frame in a case that the first indication information indicates that the sensing measurement type is the TB sensing measurement;
or,
receiving a second NDPA frame in a case that the first indication information indicates that the sensing measurement type is the non-TB sensing measurement.

11. The method of claim 10, wherein the first NDPA frame comprises one or more station information (STA info) fields; and
the second NDPA frame comprises one STA info field.

12. The method of claim 9, wherein the first indication information is a subelement of the first radio frame; and
a type sub-field of the subelement indicates parameter information corresponding to the sensing measurement type.

13. The method of claim 9, wherein before receiving the first radio frame, the method comprises:
receiving a second radio frame, the second radio frame comprising second indication information and/or third indication information; wherein the second indication information indicates that the initiator supports WLAN sensing, the third indication information indicates a sensing measurement type supported by the initiator.

14. The method of claim 13, wherein the second radio frame comprises at least one of a probe request frame, a multi-link (ML) probe request frame, an association request frame, a reassociation request frame, or an authentication request frame.

15. The method of claim 14, wherein the second indication information and/or the third indication information is carried in an extended capabilities element of the second radio frame.

16. The method of any one of claims 9 to 15, wherein the first radio frame comprises a sensing session setup request frame or a sensing measurement setup request frame.

17. A network device, wherein the network device is an initiator, and the network device comprises:
a determining module, configured to determine a first radio frame, wherein the first radio frame comprises first indication information, and the first indication information indicates a sensing measurement type of a wireless local area network (WLAN) sensing measurement procedure; and the sensing measurement type comprises a trigger-based (TB) sensing measurement or a non triggered based (non-TB) sensing measurement; and
a sending module, configured to send the first radio frame.

18. A network device, wherein the network device is a responder, and the network device comprises:
a receiving module, configured to receive a first radio frame, wherein the first radio frame comprises first indication information, and the first indication information indicates a sensing measurement type of a wireless local area network (WLAN) sensing measurement procedure initiated by an initiator; and the sensing measurement type comprises a trigger-based (TB) sensing measurement or a non triggered based (non-TB) sensing measurement; and
a processing module, configured to perform a processing operation according to the first indication information.

19. A communication device, applied to an initiator, comprising:
a radio frame determining module, configured to determine a first radio frame, wherein the first radio frame comprises first indication information, and the first indication information indicates a sensing measurement type of a wireless local area network (WLAN) sensing measurement procedure; and the sensing measurement type comprises a trigger-based (TB) sensing measurement or a non triggered based (non-TB) sensing measurement; and
a radio frame sending module, configured to send the first radio frame.

20. A communication device, applied to a responder, comprising:
a radio frame receiving module, configured to receive a first radio frame, wherein the first radio frame comprises first indication information, and the first indication information indicates a sensing measurement type of a wireless local area network (WLAN) sensing measurement procedure initiated by an initiator; and the sensing measurement type comprises a trigger-based (TB) sensing measurement or a non triggered based (non-TB) sensing measurement; and
an operation processing module, configured to perform a processing operation according to the first indication information.

21. An electronic device, comprising: a memory, a processor, and a computer program stored in the memory and executable on the processor, wherein when the processor executes the program, the method according to any one of claims 1 to 16 is implemented.

22. A computer-readable storage medium with a computer program stored thereon, wherein when the computer program is executed by a processor, the method according to any one of claims 1 to 16 is implemented.
